# EUROPÄISCHE PATENTSCHRIFT

(11) **EP 3 682 098 B1**
(45) Veröffentlichungstag und Bekanntmachung des Hinweises auf die Patenterteilung: **28.06.2023**
(21) Anmeldenummer: 18759287.8
(22) Anmeldetag: 22.08.2018
(51) Int. Cl.: F02B 67/04, F16B 2/00

(54) **HALTEVORRICHTUNG**
HOLDER
DISPOSITIF DE RETENUE

(30) Priorität: 13.09.2017 DE 102017216217
(43) Veröffentlichungstag der Anmeldung: 22.07.2020
(73) Patentinhaber: Robert Bosch GmbH, 70442 Stuttgart (DE)
(72) Erfinder: MAHFOUDH, Samir, 77815 Buehl (DE)
(86) Internationale Anmeldenummer: PCT/EP2018/072592
(87) Internationale Veröffentlichungsnummer: WO 2019/052788

(56) Entgegenhaltungen:
- DE-A1- 19 813 574
- DE-A1-102011 085 558
- DE-A1-102014 224 978
- US-A1- 2012 074 282
- US-A1- 2012 074 282

## Beschreibung

Die Erfindung geht aus von einer Haltevorrichtung, einem Elastomerhalter sowie einem Aggregat mit einer erfindungsgemäßen Haltevorrichtung und einem Verfahren zur Herstellung einer erfindungsgemäßen Haltevorrichtung nach der Gattung der unabhängigen Ansprüche.

### Stand der Technik

Bei der Konstruktion und Auslegung von Aggregaten, wie beispielsweise Kühlkreislaufpumpen für ein Kraftfahrzeug, sind die im Betrieb des Kraftfahrzeugs erwarteten dynamischen Belastungen insbesondere der Bauteile des Aggregats wie der Leiterplatte oder die Pin-Verbindungen, eine Herausforderung für die Entwickler in Bezug auf Dauerfestigkeit.

Beispielhaft seien hier Anforderungen an die Schüttelbelastbarkeit des Aggregats bei einem Anbau an einem Verbrennungsmotor genannt. Eine starre Halterung des Aggregats beziehungsweise der Pumpe am Verbrennungsmotor bedeutet eine ungedämpfte Übertragung der Anregungsenergie an die Pumpe und damit einhergehend zu hohen Schüttelbelastungen. Üblicherweise lassen sich Anregungsschwingungen durch elastische Halterungen stark dämpfen.

Es ist bereits eine Haltevorrichtung mit einem Elastomerhalter bekannt. Dabei wird der Elastomerhalter umlaufend geschlossenes Element mittels Spritzgussverfahren hergestellt.

Aus der DE 198 13 574 A1 ist eine Haltevorrichtung zur Befestigung eines Aggregats an einem Kraftfahrzeug mit einem Elastomerhalter zur Aufnahme des Aggregats bekannt, wobei der Elastomerhalter als langgestrecktes Element ausgebildet ist und dessen Enden miteinander durch ein Haltemittel zu einem Umschlusselement verbunden sind. Eine weitere Haltevorrichtung wird in US 2012/074282 A1 gezeigt.

### Offenbarung der Erfindung

### Vorteile der Erfindung

Die Erfindung geht aus von einer Haltevorrichtung zur Befestigung eines Aggregats, insbesondere einer Pumpe, an einem Kraftfahrzeug, mit einem Elastomerhalter zur Aufnahme des Aggregats, wobei der Elastomerhalter als langgestrecktes Element ausgebildet ist und dessen Enden miteinander durch ein Haltemittel zu einem Umschlusselement, insbesondere kraftschlüssig und/oder formschlüssig und/oder stoffschlüssig, verbunden sind. Es wird vorgeschlagen, dass das Haltemittel ein Einlegeteil ist, wobei das Einlegeteil im Bereich der Enden des langgestreckten Elementes angeordnet ist.

Die erfindungsgemäße Haltevorrichtung mit dem erfindungsgemäßen Elastomerhalter mit den Merkmalen der unabhängigen Ansprüche hat den Vorteil, dass die Haltevorrichtungen als Dämpfungs- und Entkopplungselement Schwingungen beziehungsweise Schüttelbelastungen am Einbauort optimal abfangen kann. Gleichzeitig kann der erfindungsgemäße Elastomerhalter mittels Extrusion hergestellt werde, was eine erhebliche Kostensenkung und damit einhergehend wirtschaftliche Vorteile mit sich bringt. Weiterhin ist es als vorteilhaft anzusehen, dass Hohlräume beziehungsweise Öffnungen entlang des Elastomerhalters durch eine Fertigung mittels Extrusion realisiert werden können. Solche Hohlräume können in vorteilhafter Weise die Entkopplungseigenschaften erhöhen, gleichzeitig kann Material eingespart werden, was mit einer zusätzlichen Kostensenkung einhergeht.

Im Rahmen der vorliegenden Erfindung kann unter einem langgestreckten Element ein im Wesentlichen ebenes, bandförmiges Element verstanden werden, dessen Länge um ein Vielfaches größer ist als die Breite. Ferner kann im Rahmen der vorliegenden Erfindung unter einem Umschlusselement ein solches Element verstanden werden, welches ein Aggregat der hier zur Rede stehenden Art umlaufend umgreift und über die so gebildete Anlagefläche eine Halterung für das Aggregat bildet.

Durch die in den Unteransprüchen aufgeführten Maßnahmen ergeben sich vorteilhafte Weiterbildungen und Verbesserungen der unabhängigen Merkmale.

Gemäß der erfindungsgemäßen Ausführungsform ist das Haltemittel ein Einlegeteil. Dabei ist das Einlegeteil erfindungsgemäß im Bereich der Enden des langgestreckten Elementes angeordnet. Ein solches Einlegeteil ermöglicht zum einen eine lokale Verstärkung der Steifigkeit des Elastomerhalters, gleichzeitig verbindet das Einlegeteil die beiden Enden des langgestreckten Elementes beziehungsweise des Elastomerhalters verliersicher miteinander, sodass ein das Aggregat umschließender Elastomerhalter bereitgestellt werden kann.

Gemäß der Erfindung ist das Einlegeteil an einer Innenwandung des Elastomerhalters angeordnet, insbesondere anliegend angeordnet, ist. Eine solche innen liegendes kann in vorteilhafter Weise eine Aufnahme für erfindungsgemäße Dämpfungselemente bereitstellen und gleichzeitig eine Befestigungsschnittstelle für den Kunden liefern. Ferner kann das Einlegeteil in vorteilhafterweise eine Positionierung beziehungsweise Führung für das langgestreckte Element bereitstellen.

Im Rahmen der vorliegenden Erfindung kann unter der einer Innenwandung die Fläche des Elastomerhalters verstanden werden, welche im montierten Zustand dem Aggregat beziehungsweise der Pumpe zugewandt ist.

Gemäß einer weiteren vorteilhaften Weiterbildung der Erfindung ist am Elastomerhalter im Bereich der Enden jeweils wenigstens eine Bohrung ausgebildet, in welche jeweils ein am Einlegteil angeordneter Aufnahmebolzen formschlüssig eingreift. Gemäß einer vorteilhaften Ausführungsform sind Bohrung und Aufnahmebolzen so dimensioniert, dass im monierten Zustand eine Presspassung bereitgestellt wird. Auf diese Weise wird ein Lösen des Elastomerhalters vom Einlegeteil im Betrieb des Kraftfahrzeugs verhindert. Gemäß einer ersten Weiterbildung der Erfindung sind zwei Aufnahmebolzen am Einlegteil angeordnet, wobei jeder Aufnahmebolzen durch eine andere Bohrung geführt wird. Es ist jedoch auch denkbar, dass nur ein Aufnahmebolzen angeordnet ist, wobei der eine Aufnahmebolzen durch beide Bohrungen geführt wird. Weiterhin ist es auch denkbar, dass im Bereich der Enden jeweils eine Vielzahl an Bohrungen angeordnet sind und am Einlegeteil entsprechend korrelierende Aufnahmebolzen angeformt sind.

Unter einem Aufnahmebolzen kann im Rahmen der vorliegenden Erfindung ein Vorsprung verstanden werden, welcher über die Kontur des Grundkörpers des Einlegeteils hinaussteht und welches dazu geeignet ist durch eine entsprechend geformte Bohrung hindurchgeführt zu werden. Ferner kann im Rahmen der vorliegenden Erfindung unter einer Bohrung eine kreisförmige Durchgangsöffnung verstanden werden. Es ist jedoch auch denkbar, dass die Bohrung einen anderen Querschnitt, wie beispielsweise einen ovalen, trapezförmigen oder rechteckigen Querschnitt. Erfindungswesentlich ist bei der Paarung aus Aufnahmebolzen und Bohrung lediglich, dass der Aufnahmebolzen durch die Bohrung hindurchgeführt werden kann uns somit eine formschlüssige Verbindung bereitgestellt werden kann. Gemäß einer weiteren vorteilhaften Ausführungsform der Erfindung ist es vorgesehen, dass das Einlegeteil einen im Wesentlichen wannenförmigen Querschnitt aufweist. Ein solcher wannenförmiger Querschnitt ermöglicht in vorteilhafter Weise einen großen Überdeckungsbereich zwischen Einlegeteil und Elastomerhalter.

Weiterhin wird vorgeschlagen, dass der Elastomerhalter an seiner Innenwandung eine umlaufende Nut aufweist, in welche ein am Einlegteil angeordneter Vorsprung formschlüssig greift. Diese formschlüssige Verbindung zwischen Vorsprung und Nut sorgt für einen definierten Sitz des Einlegeteils im Elastomerhalter.

Gemäß einer weiteren vorteilhaften Ausführungsform der Erfindung ist am Einlegeteil wenigstens ein extrudiertes Dämpfungselement angeordnet. Das Dämpfungselement entkoppelt dabei in vorteilhafter Weise das Aggregat vom Einlegeteil und damit einhergehend von der Schnittstelle. Durch eine solche erfindungsgemäße Ausgestaltung des Dämpfungselementes als ein vom Elastomerhalter unabhängiges Bauteil, können die Materialeigenschaften von Dämpfungselement und Elastomerhalter besonders bevorzugt unabhängig voneinander an die jeweiligen bauteilspezifischen Randbedingungen beziehungsweise Belastungszustände angepasst werden. Eine Herstellung der Dämpfungselemente mittels Extrusion ermöglicht eine kostenoptimierte Fertigung der Dämpfungselemente sowie eine optimierte Geometrie. So können, wie bereits erwähnt, mittels Extrusion Geometrien mit Hohlräumen beziehungsweise Öffnungen realisiert werden, welche eine zusätzliche, vorteilhafte Entkopplung und somit eine gedämpfte Übertragung von Pumpenanregungen an die Kundenschnittstelle bereitstellen.

Gemäß einer vorteilhaften Weitebildung der Erfindung wird vorgeschlagen, dass das am Einlegeteil wenigstens eine Ausnehmung angeordnet ist, in welche im montierten Zustand wenigstens ein Dämpfungselement formschlüssig greift. Auf diese Weise kann eine verliersichere Befestigung der Dämpfungselemente am Einlegeteil ohne zusätzliche Befestigungsmittel sichergestellt werden, was den Montageprozess vereinfacht.

Weiterhin wird vorgeschlagen, dass am Einlegeteil wenigstens ein Befestigungselement als Schnittstelle zum Kraftfahrzeug angeordnet ist. Gemäß einer vorteilhaften Ausführungsform der Erfindung bilden dabei die Aufnahmebolzen des Einlegeteils das Befestigungselement über welches die Pumpe am Einbauort befestigt werden kann. So kann in vorteilhafter Weise das Einlegeteil sowohl die Funktion der Kundenschnittstelle, als auch die Funktion des Haltemittels übernehmen. Neben einem solchen, integralen Befestigungselement ist es jedoch auch denkbar, dass das Befestigungselement als zusätzliches Bauteil ausgebildet ist, welches am Einlegeteil befestigt wird.

Erfindungsgemäß wird bei der Herstellung einer solchen Haltevorrichtung in vorteilhafter Weise in einem ersten Schritt das langgestreckte Element sowie die Dämpfungselemente mittels Extrusion hergestellt. Anschließend werden in einem sich anschließenden Fügeschritt die beiden Enden des extrudierten, langgestreckten Elementes durch ein entsprechendes Haltemittel kraft- und/oder form- und/oder stoffschlüssiges zu einem im Wesentlichen ringförmigen Umschlusselement verbunden. Wie bereits erwähnt weist ein solches Extrudieren von Elastomerhalter und/oder Dämpfungselementen erhebliche Kostenvorteile sowie Vorteile hinsichtlich der realisierbaren Geometrien auf.

Ausführungsbeispiele der Erfindung sind in den Figuren dargestellt und in der nachfolgenden Beschreibung näher erläutert. Es zeigen:
- Figur 1: eine perspektivische Darstellung einer Pumpe mit einer Haltevorrichtung
- Figur 2: eine perspektivische Darstellung eines erfindungsgemäßen Elastomerhalters im unmontierten Zustand,
- Figur 3: eine perspektivische Explosionsdarstellung einer erfindungsgemäßen Haltevorrichtung gemäß Figur 1,
- Figur 4: eine Ausschnitt einer erfindungsgemäßen Haltevorrichtung in einer Seitenansicht gemäß den Figuren 1 und 3.

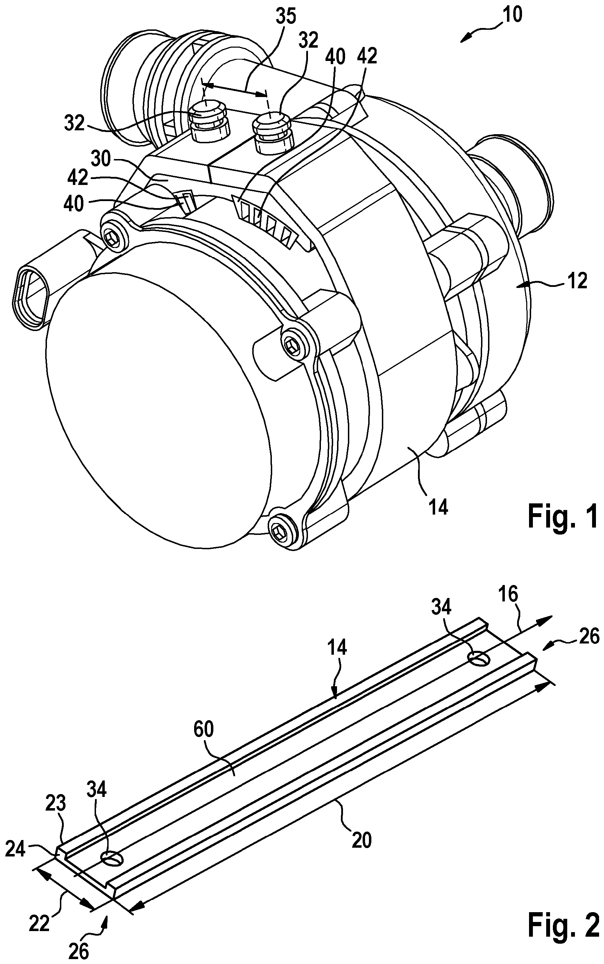

Figur 1 zeigt eine schematische, perspektivische Darstellung einer Haltevorrichtung 10 zur Befestigung einer Pumpe 12 an einem Kraftfahrzeug. Die Haltevorrichtung 10 weist dabei, wie in Figur 1 dargestellt ist, einen Elastomerhalter 14 auf, in dessen Innenraum eine Kühlkreislaufpumpe 12 eingepresst ist. Durch die Pressung zwischen Elastomerhalter 14 und Pumpengehäuse kann sichergestellt werden, dass Relativbewegungen zwischen Aggregat 12 und Elastomerhalter 14 verhindert werden.

Figur 2 zeigt einen erfindungsgemäßen Elastomerhalter 14 in einem unmontierten Zustand. Der Elastomerhalter 14 ist als langgestrecktes Element ausgebildet, d.h. er erstreckt sich als ein im Wesentlichen ebenes, bandförmiges Element in Richtung einer Längserstreckungsrichtung 16. Erfindungsgemäß weist dabei das langgestreckte Element eine um ein Vielfaches größere Länge 20 als Breite 22 auf. Ein solches langgestrecktes Element wird erfindungsgemäß mittels Extrusion hergestellt. Hierbei wird das Elastomerhalterprofil als endloses Profil extrudiert und in einem sich anschließenden Vereinzelungsschritt auf die gewünschte Länge 20 zugeschnitten. Während dem Vereinzelungsschritt sind verschiedene Schnittkanten 23 denkbar. Figur 1 zeigt eine glatte Schnittkante 23, sodass der Elastomerhalter 14 nach dem Vereinzelungsschritt eine im Wesentlichen ebene Stirnfläche 24 aufweist. Es ist jedoch auch denkbar, dass die Schnittkante 23 so gesetzt wird, dass die jeweiligen Enden 26 des Elastomerhalters 14 im Sinne zweier Puzzleenden mit zueinander korrelierenden Vorsprüngen und Nuten ineinandergreifen können.

Zur Aufnahme des Aggregates, bzw. der Pumpe 12 werden die Enden 26 des lang gestreckten Elementes in einem sich anschließenden Fügeschritt miteinander durch ein Haltemittel zu einem Umschlusselement verbunden.

Wie Figur 1 zeigt, umschließt das Umschlusselement im montierten Zustand somit das Aggregat, bzw. die Pumpe 12. Das in der Ausführungsform in Figur 1 gezeigte Umschlusselement ist dabei als ringförmiges Element ausgebildet. Es ist jedoch auch denkbar, dass entsprechend der Außenkontur des aufgenommenen Aggregates bzw. der Pumpe 12 das Umschlusselement eine andere Form bildet.

Die in den Figuren 1,3 und 4 gezeigte Ausführungsform der Haltevorrichtung 10 zeigt ein als ein Einlegeteil 30 ausgebildetes Haltemittel. Wie Figur 1 zeigt, sind am Einlegeteil 30 zwei Anschlussbolzen 32 angeordnet. Erfindungsgemäß wird ein solches Einlegeteil 30 mittels Spritzgussverfahren hergestellt, wobei es in ein Elastomer-Spritzwerkzeug eingelegt und anschließend vulkanisiert wird. Zur Verbindung der beiden Enden 26 des langgestreckten Elementes zu einem Umschlusselement weist der Elastomerhalter 14, wie in Figur 2 dargestellt ist, im Bereich der Enden 26 jeweils eine durchgehende Bohrung 34 auf. Im montierten Zustand greift durch jeweils eine Bohrung ein entsprechender Anschlussbolzen 32 des Einlegeteils 30. Auf diese Weise sind die Enden 26, wie in Figur 1 dargestellt, formschlüssig zu einem Umschlusselement verbunden. Dabei ist der Abstand 35 der beiden Anschlussbolzen 32 vorzugsweise so dimensioniert, dass die Stirnflächen 24 des Elastomerhalters 14 kontaktierend aneinander anliegen.

Neben einer solchen, in Figur 1 dargestellten, formschlüssigen Verbindung der Enden 26 zu einem Umschlusselement mittels eines als Einlegeteil 30 ausgebildeten Haltemittels, sind auch andere Haltemittel bzw. Verbindungsformen denkbar. So ist es beispielsweise auch möglich, dass die Enden 26 mittels einer einfachen Nietverbindung miteinander verbunden werden. Gemäß einer weiteren Ausführungsform ist es weiterhin denkbar, dass das Haltemittel, wie bereits erwähnt, durch die gewählte Schnittkante 23 während dem Vereinzelungsschritt im Sinne einer puzzleartigen Nut Feder Verbindung ausgebildet ist. Ferner ist es auch denkbar, dass die beiden Enden 26 über eine stoffschlüssige Verbindung, wie beispielsweise eine Klebeverbindung miteinander verbunden werden. Ferner ist es auch denkbar, dass zwischen den Stirnflächen 24 des Elastomerhalters 14 im montierten Zustand ein schmaler Spalt verbleibt. Erfindung wesentlich ist hierbei lediglich, dass der Elastomerhalter 14 das Aggregat bzw. die Pumpe 12umgreift und das ein Haltemittel vorgesehen ist, welches die beiden Enden 26 des lang gestreckten Elementes miteinander verliersicher verbindet.

Wie in Figur 1 zu erkennen ist, weist das Einlegeteil 30 einen im Wesentlichen wannenförmigen Querschnitt auf. Vorzugsweise ist das Einlegeteil 30 im montierten Zustand an der Innenwandung 36, das heißt der dem Pumpengehäuse zugewandten Seite des Elastomerhalters 14 anliegend angeordnet. Zur Dämpfung bzw. Entkopplung zwischen der Pumpe 12 und dem Einlegeteil 30 und damit einhergehend der Kundenschnittstelle zur Befestigung im Motorraum, sind am Einlegeteil 30 zwei Dämpfungselemente 40 angeordnet. Die Dämpfungselemente 40 liegen im montierten Zustand, wie in Figur 1 deutlich zu erkennen ist, zwischen Pumpe 12 und Einlegeteil 30, sodass das Einlegeteil 30 nicht am Pumpengehäuse anliegt. Zur Aufnahme der Dämpfungselemente 40 weist das Einlegeteil 30 an seiner dem Pumpengehäuse zugewandten Seite entsprechende Ausnehmungen 42 auf, in welche im montierten Zustand die Dämpfungselemente formschlüssig greifen.

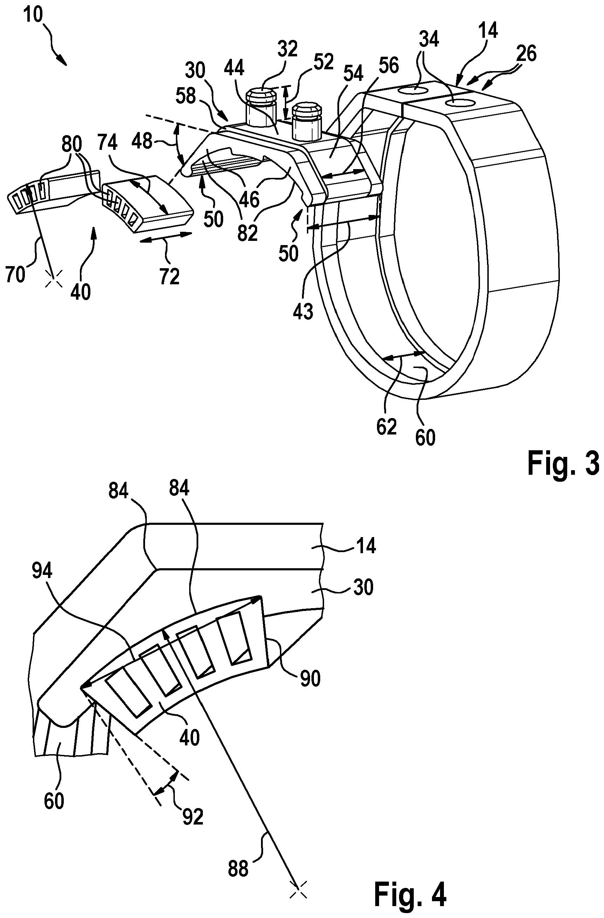

Figur 3 zeigt eine Ausführungsform der Haltevorrichtung 10 gemäß Figur 1 in einer perspektivischen Explosionsdarstellung. Wie in Figur 3 deutlich zu erkennen ist, ist der Elastomerhalter 14 als langgestrecktes Element ausgebildet, wobei die Enden 26 miteinander über das Einlegeteil 30 verbunden sind. Das Einlegeteil 30, welches sowohl die Funktion der Verbindung zwischen den beiden Enden 26 des Elastomerhalters 14, als auch die Funktion des Befestigungselementes beziehungsweise der Kundenschnittstelle übernimmt, weist einen im Wesentlichen wannenförmigen Querschnitt auf, wobei sich an einen im Wesentlichen ebenen Mittelbereich 44 jeweils Schenkel 46 anschließen, welche unter einem Schenkelwinkel 48 zur Ebene des Mittelbereiches 44 angeordnet sind. Vorzugsweise liegt der Schenkelwinkel 48 im Bereich zwischen 30° und 60°, insbesondere zwischen 40° und 50°. Es sind jedoch auch kleinere oder größere Schenkelwinkel 48 denkbar. Vorzugsweise weisen die Schenkel 46 jeweils einen abgerundetes Schenkelende 50 auf, sodass der Elastomerhalter im montierten Zustand über die abgerundeten Schenkelenden 50 geführt wird und somit die lokale Belastung des Elastomerhalters 14 in vorteilhafterweise verringert werden kann.

Wie in Figur 3 dargestellt ist, sind am Mittelbereich 44 des Einlegeteils 30 zwei Aufnahmebolzen 32 einstückig ausgebildet. Ein solches erfindungsgemäßes Einlegeteil 30 wird vorzugsweise durch Spritzgießen, vorzugsweise aus Polyamid hergestellt. Die Höhe 52 der Aufnahmebolzen 32 ist gemäß der hier dargestellten Ausführungsform so bemessen, dass diese nach der Durchführung durch die entsprechenden Bohrungen 34 über die Außenkontur des Elastomerhalters 14 überstehen. In diesem überstehenden Bereich bilden die Aufnahmebolzen 32 eine entsprechende Kundenschnittstelle zur Befestigung der Pumpe, beziehungsweise des Aggregates 12.

Wie in Figur 3 weiterhin deutlich zu erkennen ist, weist das Einlegeteil 30 an der dem Pumpengehäuse angewandten Seite eine sich in Längsrichtung über die gesamte Länge des Einlegeteils 30 erstreckenden Vorsprung 54 auf. Gemäß der hier dargestellten Ausführungsform ist der Vorsprung 54 in Querrichtung mittig angeordnet. Der Vorsprung 54 weist ferner eine Breite 56 auf, welche kleiner ist als die Breite 43 des Einlegeteils 30, sodass sich seitlich in Querrichtung an den Vorsprung 54 jeweils ein Absatz 58 anschließt.

Wie in Figur 3 weiterhin zu erkennen ist, nimmt die Höhe des Vorsprungs 54 in Richtung der Schenkelenden 50 kontinuierlich ab. Im montierten Zustand sitzt der Vorsprung 54 formschlüssig in einer am Elastomerhalter 14 ausgebildeten, umlaufenden Nut 60. Wie in den Figuren 1 und 3 deutlich zu erkennen ist, erstreckt sich die Nut 60 über die gesamte Länge 20 des Elastomerhalters 14 rinnenförmig in Längsrichtung 16. Die Breite 62 der Nut 60 des Elastomerhalters 14 entspricht dabei im Wesentlichen der Breite 56 des Vorsprungs 54, sodass diese im Sinne einer Führungsschiene die Relativposition von Einlegeteil 30 und Elastomerhalter 14 in Querrichtung festlegt.

Neben dem Elastomerhalter 14 und dem Einlegeteil 30 weist die Haltevorrichtung 10 zwei Dämpfungselemente 40 auf. Wie in Figur 3 deutlich zu erkennen ist, weisen die Dämpfungselemente 40 einen im Wesentlichen rohrsegmentförmigen beziehungsweise kreissegmentförmigen Querschnitt mit einer entsprechenden Krümmung auf, wobei der Radius der Krümmung 70 im Wesentlichen dem Radius des Aggregats beziehungsweise der Pumpe 12 entspricht, sodass die jeweiligen Innenflächen der Dämpfungselemente 40 flächig am Pumpengehäuse anliegen. Ferner entspricht die Breite 72 der Dämpfungselemente 40 im Wesentlichen der Breite 56 des Einlegeteils 30 beziehungsweise der Breite 22 des Elastomerhalters 14.

Erfindungsgemäß werden die Dämpfungselemente 40 mittels Extrusion hergestellt. Dabei wird ein entsprechendes Extrudant beliebig langer Länge gefertigt und dieses in einem Vereinzelungsschritt auf die gewünschte Länge 74 der Dämpfungselemente 40 zurechtgeschnitten. Eine solche extrudierte Form der Dämpfungselemente lässt sich in vorteilhafterweise kostengünstig herstellen. Ferner lassen sich mittels Extrusion auch solche Dämpfungselemente 40 realisieren, welche in der Wandung Öffnungen 80 aufweisen. Eine solche Ausführungsform der Dämpfungselemente 40 mit erfindungsgemäßen Öffnungen 80 in der Wandung ist in Figur 3 dargestellt. Wie zu erkennen ist, sind in die Wandung der Dämpfungselemente 40 jeweils vier sich in Querrichtung erstreckende, durchgehende Öffnungen 80 eingebracht. Diese Öffnungen 80 weisen einen im Wesentlichen rechteckigen Querschnitt auf und verbessern in vorteilhafter Weise die dämpfende und entkoppelnde Funktion der Dämpfungselemente 40. Es sei an dieser Stelle jedoch ausdrücklich erwähnt, dass in Abhängigkeit der gewünschten Funktion Anzahl und Querschnittsform der Öffnungen 80 variiert werden kann. So ist es beispielsweise auch denkbar, dass die Öffnungen 80 einen kreisförmigen, ovalen oder trapezförmigen Querschnitt aufweisen. Ferner kann es auch denkbar sein, dass die Öffnungen 80 nicht durchgehend ausgeformt sind oder unter einem Winkel zur Querrichtung angeordnet sind.

Zur Positionierung der Dämpfungselemente 40 weist das Einlegeteil 30 an seiner dem Aggregat beziehungsweise der Pumpe 12 zugewandten Seite zwei sich in Querrichtung erstreckende Ausnehmungen 82 auf. Position und Form der Ausnehmungen 82 ist in Figur 4 näher dargestellt und erläutert.

Bei der Montage der Haltevorrichtung 10 werden in einem ersten Schritt zunächst die Dämpfungselemente 40 in die Ausnehmungen 82 des Einlegeteils 30 eingesetzt. Anschließend wird eine Seite des langgestreckten Elastomerhalters 14 mit der Bohrung 34 auf einen entsprechenden Aufnahmebolzen 32 aufgepresst. In einem nächsten Schritt wird dann der Elastomerhalter 14 um das Aggregat 12 beziehungsweise die Pumpe herumgelegt und mit seiner zweiten Bohrung 34 in dem entsprechenden Aufnahmebolzen 32 eingehängt. Bei der Überführung des langgestreckten Elementes zu dem Umschlusselement wird der Elastomerhalter 14 mit Zug aufschlagt, sodass eine ausreichend große Flächenpressung zwischen dem Elastomerhalter 14 und dem Pumpengehäuse bereitgestellt wird. Die Nut 60 im Elastomerhalter 14 sorgt dabei für eine eindeutige Positionierung des Elastomerhalters 14 auf dem Einlegeteil 30 in Querrichtung.

Figur 4 zeigt einen Ausschnitt deines erfindungsgemäßen Halteelementes 10 gemäß Figur 3 im montierten Zustand. Wie in Figur 4 deutlich zu erkennen ist, ist die, das Dämpfungselement 40 aufnehmende Ausnehmung 82 an der, der Pumpe 12 zugewandten Seite des Einlegeteils 30 eingebracht. Die Ausnehmungen 82 sind dabei insbesondere mittig im Bereich des Knicks 84 zwischen dem Mittelbereich 44 und dem entsprechenden Schenkel 46 angeordnet. Ferner weisen die Ausnehmungen 82 im Querschnitt eine schwalbenschwanzförmige Form auf, wobei die Grundfläche 86 eine Krümmung aufweist, dessen Radius 88 im Wesentlichen dem Radius 70 der Dämpfungselemente 40 entspricht. Die Seitenwandungen 90 der Ausnehmungen 82 sind dabei unter einem Neigungsweingel 92 nach innen geneigt, sodass die Länge 94 der Ausnehmungen 82 in Richtung der Pumpe 12 kontinuierlich abnimmt. Dieser schwalbenschwanzförmige Querschnitt der Ausnehmungen 82 sorgt dafür, dass die Dämpfungselemente 40 fest in den Ausnehmungen sitzen.

## Patentansprüche

1. Haltevorrichtung (10) zur Befestigung einer Pumpe, an einem Kraftfahrzeug, mit einem Elastomerhalter (14) zur Aufnahme des Aggregats (12), wobei der Elastomerhalter (14) als langgestrecktes Element ausgebildet ist und dessen Enden (26) miteinander durch ein Haltemittel zu einem Umschlusselement, insbesondere kraftschlüssig und/oder formschlüssig und/oder stoffschlüssig, verbunden sind, **dadurch gekennzeichnet, dass** das Haltemittel ein Einlegeteil (30) ist, wobei das Einlegeteil (30) im Bereich der Enden (26) des langgestreckten Elementes angeordnet ist und wobei das Einlegeteil (30) an einer Innenwandung (36) des Elastomerhalters (14) angeordnet ist.

2. Haltevorrichtung (10) nach einem der vorhergehenden Ansprüche, **dadurch gekennzeichnet, dass** das Einlegeteil (30) an einer Innenwandung (36) des Elastomerhalters (14 anliegend angeordnet ist.

3. Haltevorrichtung (10) nach einem der vorhergehenden Ansprüche, **dadurch gekennzeichnet, dass** am Elastomerhalter (14) im Bereich der Enden (26) jeweils wenigstens eine Bohrung (34) ausgebildet ist, in welche jeweils ein am Einlegteil (30) angeordneter Aufnahmebolzen (32) formschlüssig eingreift.

4. Haltevorrichtung (10) nach einem der vorhergehenden Ansprüche, **dadurch gekennzeichnet, dass** das Einlegeteil (30) ein im Wesentlichen wannenförmigen Querschnitt aufweist.

5. Haltevorrichtung (10) nach einem der vorhergehenden Ansprüche, **dadurch gekennzeichnet, dass** der Elastomerhalter (14) an seiner Innenwandung (36) eine umlaufende Nut (60) aufweist, in welche ein am Einlegteil (30) angeordneter Vorsprung (54) formschlüssig greift.

6. Haltevorrichtung (10) nach einem der vorhergehenden Ansprüche, **dadurch gekennzeichnet, dass** am Einlegeteil (30) wenigstens ein extrudiertes Dämpfungselement (40) angeordnet ist.

7. Haltevorrichtung (10) nach einem der vorhergehenden Ansprüche, **dadurch gekennzeichnet, dass** das Einlegeteil (30) wenigstens eine Ausnehmung (82) angeordnet ist, in welche im montierten Zustand wenigstens ein Dämpfungselement (40) formschlüssig greift.

8. Haltevorrichtung (10) nach einem der vorhergehenden Ansprüche, **dadurch gekennzeichnet, dass** am Einlegeteil (30) wenigstens ein Befestigungselement als Schnittstelle zum Kraftfahrzeug angeordnet ist.

9. Elastomerhalter (14) für eine Haltevorrichtung (10) nach einem der vorhergehenden Ansprüche, **dadurch gekennzeichnet, dass** der Elastomerhalter (14) als langgestrecktes Element ausgebildet ist, wobei die Enden (26) des langgestreckten Elementes verbunden sind und wenigstens ein als Einlegeteil (30) ausgebildetes Haltemittel zur kraft- und/oder form- und/oder stoffschlüssigen Verbindung der beiden Enden (26) zu einer Anordnung im Bereich der Enden (26) des langgestreckten Elementes vorgesehen ist, wobei das Einlegeteil (30) an einer Innenwandung (36) des Elastomerhalters (14) angeordnet ist.

10. Aggregat (12) , insbesondere Pumpe mit einer Haltevorrichtung (10) nach einem der vorhergehenden Ansprüche.

11. Verfahren zur Herstellung einer Haltevorrichtung (10) zur Befestigung eines Aggregats (12), insbesondere einer Pumpe an einem Kraftfahrzeug mit folgenden Schritten:
▪ Extrudieren des langgestreckten Elementes,
▪ kraft- und/oder form- und/oder stoffschlüssiges Verbinden der beiden Enden (26) des extrudierten, langgestreckten Elementes durch ein Haltemittels zu einem im Wesentlichen ringförmigen Umschlusselement, wobei das Haltemittel ein Einlegeteil (30) ist, wobei das Einlegeteil (30) im Bereich der Enden (26) des langgestreckten Elementes angeordnet ist und wobei das Einlegeteil (30) an einer Innenwandung (36) des Elastomerhalters (14) angeordnet ist.

## Claims

1. Holding device (10) for fastening a pump to a motor vehicle, having an elastomer holder (14) for receiving the assembly (12), wherein the elastomer holder (14) is in the form of an elongate element and its ends (26) are connected to one another, in particular in a force-fitting and/or form-fitting and/or materially bonded manner, by a holding means to form an enclosure element, **characterized in that** the holding means is an insert part (30), wherein the insert part (30) is arranged in the region of the ends (26) of the elongate element, and wherein the insert part (30) is arranged on an inner wall (36) of the elastomer holder (14).

2. Holding device (10) according to one of the preceding claims, **characterized in that** the insert part (30) is arranged in abutment against an inner wall (36) of the elastomer holder (14).

3. Holding device (10) according to either of the preceding claims, **characterized in that**, in the elastomer holder (14), there is formed in the region of the ends (26) in each case at least one bore (34), into which in each case one receiving pin (32) arranged on the insert part (30) engages in a form-fitting manner.

4. Holding device (10) according to one of the preceding claims, **characterized in that** the insert part (30) has a substantially trough-shaped cross-section.

5. Holding device (10) according to one of the preceding claims, **characterized in that**, on its inner wall (36), the elastomer holder (14) has an encircling groove (60) into which a projection (54) arranged on the insert part (30) engages in a form-fitting manner.

6. Holding device (10) according to one of the preceding claims, **characterized in that** at least one extruded damping element (40) is arranged on the insert part (30).

7. Holding device (10) according to one of the preceding claims, **characterized in that** at least one recess (82) is arranged the insert part (30), into which at least one recess at least one damping element (40) engages in a form-fitting manner in the fitted state.

8. Holding device (10) according to one of the preceding claims, **characterized in that**, on the insert part (30), there is arranged at least one fastening element as an interface to the motor vehicle.

9. Elastomer holder (14) for a holding device (10) according to one of the preceding claims, **characterized in that** the elastomer holder (14) is in the form of an elongate element, wherein the ends (26) of the elongate element are connected and provision is made in the region of the ends (26) of the elongate element of at least one holding means, in the form of an insert part (30), for force-fitting and/or form-fitting and/or materially bonded connection of the two ends (26) to form an arrangement, wherein the insert part (30) is arranged on an inner wall (36) of the elastomer holder (14).

10. Assembly (12), in particular a pump having a holding device (10) according to one of the preceding claims.

11. Method for producing a holding device (10) for fastening an assembly (12), in particular a pump, to a motor vehicle, comprising the following steps:
• extruding the elongate element,
• connecting the two ends (26) of the extruded elongate element in a force-fitting and/or form-fitting and/or materially bonded manner by way of a holding means to form a substantially annular enclosure element, wherein the holding means is an insert part (30), wherein the insert part (30) is arranged in the region of the ends (26) of the elongate element, and wherein the insert part (30) is arranged on an inner wall (36) of the elastomer holder (14).

## Revendications

1. Dispositif de retenue (10) pour la fixation d'une pompe, sur un véhicule automobile, avec un support en élastomère (14) pour recevoir le groupe (12), le support en élastomère (14) étant réalisé sous forme d'élément allongé et dont les extrémités (26) sont reliées entre elles par un moyen de retenue, notamment par adhérence et/ou par complémentarité de forme et/ou par liaison de matière, pour former un élément d'enveloppement, **caractérisé en ce que** le moyen de retenue est une pièce d'insertion (30), la pièce d'insertion (30) étant agencée dans la zone des extrémités (26) de l'élément allongé et la pièce d'insertion (30) étant agencée sur une paroi intérieure (36) du support en élastomère (14).

2. Dispositif de retenue (10) selon l'une quelconque des revendications précédentes, **caractérisé en ce que** la pièce d'insertion (30) est agencée en appui sur une paroi intérieure (36) du support en élastomère (14).

3. Dispositif de retenue (10) selon l'une quelconque des revendications précédentes, **caractérisé en ce que** sur le support en élastomère (14), dans la zone des extrémités (26), est formé à chaque fois au moins un alésage (34) dans lequel s'engage par complémentarité de forme un boulon de réception (32) agencé sur la pièce d'insertion (30).

4. Dispositif de retenue (10) selon l'une quelconque des revendications précédentes, **caractérisé en ce que** la pièce d'insertion (30) présente une section transversale essentiellement en forme de cuvette.

5. Dispositif de retenue (10) selon l'une quelconque des revendications précédentes, **caractérisé en ce que** le support en élastomère (14) présente sur sa paroi intérieure (36) une rainure périphérique (60) dans laquelle une saillie (54) agencée sur la pièce d'insertion (30) s'engage par complémentarité de forme.

6. Dispositif de retenue (10) selon l'une quelconque des revendications précédentes, **caractérisé en ce qu'**au moins un élément d'amortissement extrudé (40) est agencé sur la pièce d'insertion (30).

7. Dispositif de retenue (10) selon l'une quelconque des revendications précédentes, **caractérisé en ce que** la pièce d'insertion (30) est pourvue au moins un évidement (82) dans lequel s'engage, à l'état monté, au moins un élément d'amortissement (40) par complémentarité de forme.

8. Dispositif de retenue (10) selon l'une quelconque des revendications précédentes, **caractérisé en ce que** sur la pièce d'insertion (30) est agencé au moins un élément de fixation en tant qu'interface avec le véhicule automobile.

9. Support en élastomère (14) pour un dispositif de retenue (10) selon l'une quelconque des revendications précédentes, **caractérisé en ce que** le support en élastomère (14) est réalisé sous forme d'élément allongé, les extrémités (26) de l'élément allongé étant reliées et au moins un moyen de retenue réalisé sous forme de pièce d'insertion (30) étant prévu pour relier les deux extrémités (26) par adhérence et/ou par complémentarité de forme et/ou par liaison de matière en un agencement dans la zone des extrémités (26) de l'élément allongé, la pièce d'insertion (30) étant agencée sur une paroi intérieure (36) du support en élastomère (14).

10. Groupe (12), notamment pompe, avec un dispositif de retenue (10) selon l'une quelconque des revendications précédentes.

11. Procédé de fabrication d'un dispositif de retenue (10) pour la fixation d'un groupe (12), notamment d'une pompe, sur un véhicule automobile, comprenant les étapes suivantes :
- l'extrusion de l'élément allongé,
- la liaison par adhérence et/ou par complémentarité de forme et/ou par liaison de matière des deux extrémités (26) de l'élément allongé extrudé par un moyen de retenue en un élément d'enveloppement essentiellement annulaire, le moyen de retenue étant une pièce d'insertion (30), la pièce d'insertion (30) étant agencée dans la zone des extrémités (26) de l'élément allongé et la pièce d'insertion (30) étant agencée sur une paroi intérieure (36) du support en élastomère (14).
